# EUROPEAN PATENT APPLICATION

(11) **EP 2 071 531 A1**
(43) Date of publication of application: **17.06.2009**
(21) Application number: 08380256.1
(22) Date of filing: 27.08.2008
(51) Int. Cl.: G07F 9/02

(54) **Dispensing machine with an antenna**

(30) Priority: 28.08.2007 ES 200702343 P
(71) Applicant: Zalbide Elustondo, Pedro, 20305- Irún, Guipúzcoa (ES)
(72) Inventor: Zalbide Elustondo, Pedro, 20305- Irún, Guipúzcoa (ES)
(74) Representative: Carvajal y Urquijo, Isabel

(57) **Abstract**

The present invention relates to a dispensing machine with an antenna, of the type which dispenses each item (3) with an RFID tag adhered to it. The machine (1) has an antenna (5) movable along a shaft (6) by means of a motor (8) controlled by a control unit (9), compartments (2) for each item (3) and detection means (7) in each compartment (2) detecting the withdrawal and replacement of an item (3). When the withdrawal or replacement of an item (3) occurs the control unit (9) moves the antenna (5) to a position close to its compartment (2) and reads the RFID tags located in the range of the antenna (5) to obtain the inventory of said area and, due to the stock variation, knowing the withdrawn or replaced item, depending on whether it is a withdrawal or replacement of an item (3).

## Description

### Field of the Invention

The present invention is encompassed within the field of item dispensing machines, and specifically of those that have internal RFID antennas to read the items inside them. The present dispensing machine can be used for workshop or office items (implements, tools, tool box, printer toner, etc.); for menus (menus identified by means of RFID) hospital garments such as shirts, pants or white coats; fresh food labeled with RFID tags, and generally any package or item with RFID tags (CD, DVD, etc.), normally UHF tags (which work in the UHF frequency band).

### Background of the Invention

There are currently dispensing machines with antennas that read inside the machine. Most of them are based on 13.56 MHz technology. To avoid the problems of coverage of the antennas in this frequency these antennas are assembled in the three Cartesian axes and occupy the entire machine. This design has several problems:
- High power consumption.
- Very high cost of the machine due to the type and number of antennas used.
- Low frequency (normally 125 KHz or 13.56 MHz) which generates problems of reading at a certain distance and most of all in certain positions of the RF tag.

The object of the present invention is to implement an antenna inside a dispensing machine but which uses low emission power to minimize the negative effects generated by working in a closed sheet metal environment, such as signal rebound effect. This antenna is small and is moved by means of a numerical control shaft along the vertical shaft of the machine. The antenna only reads part of the total content of items of the machine, exactly in that area in which an item input or output task is being carried out. The auto-dispensed items have RFID (Radio Frequency Identification) tags. The antenna captures in a certain position only those RFID tags present in that area of the machine, but when scanning in its movement along its shaft it captures the information supplied by each RFID tag, thus obtaining the complete inventory of the dispensing machine.

The present invention makes it possible to use tags which work in shorter wave lengths (higher frequencies) inside the machine, which improves the item reading ratio. This is due to 2 reasons: these higher frequencies allow using antennas more adjusted to the field depth and tags working in these frequencies are more immune to the position of the same inside the machine. All of this further results in a greater volume of reading inside the machine, which in turn involves higher stock since the antennas read the entire volume of the machine (there are no dark areas) and, in short, in a lower cost per transaction.

This solution is important for machines with items identified with RFID but are difficult to read, items which move a lot and which have unstable positions inside the machine (such as hospital garments) or in those machines in which the item has a very high value, either direct (high cost of the item) or indirect (important economic effect by a production stop due to a shortage, when the user takes product but it is not passed through the code reader of the machine, the stock is not updated and this results in losses due to a lack of production in the workshops, losses that can be reduced by means of a better control of stock).

With the present invention it how much product remains in stock can be known in real time and with high reliability before making each request.

### Description of the Invention

The invention relates to dispensing machine with an antenna, of the type which dispenses each item with an RFID tag adhered to it, according to claim 1. Preferred embodiments of the machine are defined in the dependent claims.

The dispensing machine object of the present invention has a control unit, an antenna movable along a shaft by means of the action of actuation means (an electric motor, for example) controlled in turn by the control unit, a plurality of compartments in which the items to be dispensed are deposited and detection means in each compartment which detect the withdrawal and replacement of an item, the control unit receiving said information.

The control unit is set up for, once the withdrawal or replacement of an item occurs, moving the antenna to a position close to the compartment in which said item is located and reading the RFID tags located in the range of the antenna to obtain the inventory of said area and, due to stock variation, knowing the withdrawn or replaced item, depending on whether it is a withdrawal or a replacement of an item.

Each compartment preferably has a door for accessing the same. In this case the machine additionally has chosen compartment detection means responsible for identifying the chosen compartment for withdrawing the item, the control unit receiving said information.

The machine can additionally have selection means, as a keypad, by means of which the user selects the chosen compartment for withdrawing the item. The chosen compartment detection means use the information supplied by the selection means to determinate the compartment chosen by the user.

The chosen compartment detection means are normally located in the door itself and comprise open door detection means.

The selection of the chosen compartment for withdrawing the item can also be done remotely by a central server.

The machine can additionally have user authentication means set for, once the user is authenticated, allowing the user to open at least one door for the extraction of at least one item.

The antenna used in the machine can be of different types: dipole antenna and patch panel antenna, among others. In a preferred embodiment, the shaft on which the antenna moves is vertically arranged inside the dispensing machine, and the movement of the antenna along the shaft is controlled by means of CNC (computer numerical control).

The detection means in each compartment which detect the withdrawal or replacement of an item can comprise weighing detection cells on which the item to be dispensed is placed.

### Brief Description of the Drawings

A series of drawings which aids to better understand the invention and which relates expressly to an embodiment of said invention, presented as a non-limiting example of the latter, is briefly described below.

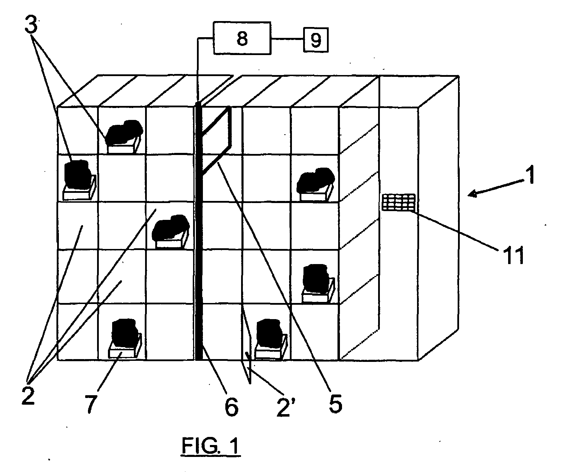

Figure 1 schematically shows the dispensing machine object of the invention.

### Description of a Preferred Embodiment of the Invention

As shown in Figure 1, the dispensing machine 1 has a series of compartments 2 in which the items 3 to be dispensed are located. Each compartment 2 has its door 2' (Figure 1 only shows an open door 2') which is controlled by the control unit 9 of the machine 1. The machine 1 further has a general door which is used for refilling items. Once this door is open, the person responsible for refilling it has access to all the niches directly, without needing to open each niche one by one, which greatly improves the productivity of said person. Each item 3 has an incorporated RFID tag. The dispensing machine 1 has in turn an antenna 5, located in a numerical control shaft 6. The antennas to be used can be both of the dipole type and the patch panel type. The selection of each type is made depending on whether the antenna is located in the center of the machine or in a side of the same. The antennas can be of different frequencies, although this machine design is especially adapted to the use of high frequencies, since the quality of reading attainable in unstable reference items such as those proposed in this machine improves when incrementing the frequency.

The movement of the antenna 5 along the shaft 6 is performed by means of CNC (Computer Numerical Control), i.e., the positioning of the antenna is controlled by means of actuation means 8 (normally an electric motor) controlled by the control unit 9 (for example a microcontroller or microprocessor) by means of orders prepared automatically from numerical information in real time.

The CNC is integrated in the control unit 9 (microprocessor) of the machine and the movement data are obtained by any of the following three routes:
- by selection of the compartment 2 by the user;
- by selection of the compartment 2 by the data center web server, in the event that the machine is connected via Internet to a data center (in this case an http protocol and encryption with SSL are used);
- by detection of the compartment 2 in which there is movement.

Each door has an open door detection micro-sensor or sensor. The open door detection sensors are located in the door opening mechanism, in the same plastic mold. The person must press the door to activate the detection sensor and with this, if the conditions are fulfilled, the solenoid which unblocks the opening is activated.

In the event that the selection of the compartment 2 is performed remotely by a server, the user presses the door suggested by the machine, whereby when pressing the suggestion made by the machine is accepted and the door is automatically unblocked, i.e., the door does not open by itself but rather by the person accepting the suggestion of the machine when pressing the micro and thereby unblocking the door. The machine can assure further whether or not the person has taken the product by means of detection means 7 in each compartment 2 for detecting withdrawal or replacement of an item 3, for example weighing cells which measure the value of the weighing after the door is closed. If there continues to be weight, it allows the user to open the door again (if for example the door has accidentally closed).

As shown in Figure 1, the machine 1 can have selection means 11, for example a keypad, for selecting the type of administration functions and tasks, among others.

The antenna 5 quickly moves to the part of the dispensing machine 1 in which there is movement of items. The level of the movement of the item (selection of compartment 2) is known by the numerical control by one of the three routes. As previously commented, the machine further has detection means 7 in each compartment (2) for detecting the withdrawal or replacement of an item 3. These means can consist for example of a weighing cell by means of which the weight is captured in each compartment, the dispensing machine 1 thus detecting the corresponding compartment 2 in the moment in which an item 3 is withdrawn from or added to the machine 1. The detection of movement in the compartments can be performed by other types of detectors located in the compartments, such as for example detectors which detect the presence or absence of the items 3. This second form of detecting actions inside the machine 1 further allows managing products which do not have RFID tags, which greatly broadens the field of application of these machines.

Once the antenna 5 has reached the area closest to the compartment 2 in which movement has occurred, the antenna 5 is activated, requesting from the RFID tags of the items 3 their identification, performing an inventory function only in this area. The RFID tags which received the antenna signal respond with an identification message. The content of the memory blocks of each RFID tag (for example, "Coat color red size XL") or simply a number which identifies the item type can also be included in the identification message, in addition to the unique identification of each RFID tag.

The interrogation process between RFID tag and antenna 5 can be different depending on whether the tag is active or passive.

Performing the inventory by area allows:
- using a much lower emission power;
- using antennas with very lineal emission for improving the reading in this area;
- raising the operating frequency of the antenna 5 since the emitted power is much lower;
- inventorying only the part that has experienced a change, not all the stock of the machine.

Therefore, when the item 3 is placed in or taken out of the machine 1, the antenna 5 performs another inventory according to the updated compartment 2 and knows, due to the stock variation, what the user has used.

## Claims

1. A dispensing machine with an antenna, of the type which dispenses each item (3) with an RFID tag adhered to it, **characterized in that** the dispensing machine (1) has:
- a control unit (9);
- an antenna (5) movable along a shaft (6) by means of the action of actuation means (8) in turn controlled by the control unit (9);
- a plurality of compartments (2) in which the items (3) to be dispensed are deposited;
- detection means (7) in each compartment (2) which detect the withdrawal and replacement of an item (3), the control unit (9) receiving said information; and **in that** the control unit (9) is set for, once the withdrawal or replacement of an item (3) occurs, moving the antenna (5) to a position close to the compartment (2) in which said item (3) is located and reading the RFID tags located in the range of the antenna (5) to obtain the inventory of said area and, due to the stock variation, knowing the withdrawn or replaced item, depending on whether it is a withdrawal or replacement of an item (3).

2. The dispensing machine according to claim 1, **characterized in that** each compartment (2) has a door (2') for accessing the same, and **in that** the machine (1) additionally has chosen compartment detection means responsible for identifying the chosen compartment (2) for withdrawing the item (3), the control unit (9) receiving said information.

3. The dispensing machine according to any of the preceding claims, **characterized in that** the machine (1) additionally has selection (11) means by means of which the user selects the chosen compartment (2) for withdrawing the item (3).

4. The dispensing machine according to claims 2 and 3, **characterized in that** the chosen compartment detection means use the information supplied by the selection means (11) to determinate the compartment (2) chosen by the user.

5. The dispensing machine according to any of claims 2 to 3, **characterized in that** the chosen compartment detection means are located in the door (2') itself and comprise open door detection means (2').

6. The dispensing machine according to any of claims 1-2, **characterized in that** the selection of the chosen compartment for withdrawing the item (3) is performed remotely by a central server.

7. The dispensing machine according to any of claims 2 to 6, **characterized in that** the machine (1) additionally has user authentication means set for, once the user is authenticated, allowing the user to open at least one door (2') for the extraction of at least one item (3).

8. The dispensing machine according to any of the preceding claims, **characterized in that** the antenna (5) used is selected from the following types:
- dipole antenna;
- patch panel antenna.

9. The dispensing machine according to any of the preceding claims, **characterized in that** the shaft (6) is arranged vertically inside the dispensing machine (1).

10. The dispensing machine according to any of the preceding claims, **characterized in that** the movement of the antenna (5) along the shaft is controlled by means of CNC (computer numerical control).

11. The dispensing machine according to any of the preceding claims, **characterized in that** the detection means (7) in each compartment (2) which detect the withdrawal or replacement of an item (3) comprise weighing detection cells on which the item (3) to be dispensed is placed.

12. The dispensing machine according to any of the preceding claims, **characterized in that** the actuation means (8) comprise an electric motor.
